## Europäisches Patentamt

## European Patent Office

## Office européen des brevets

(19)

(11) Veröffentlichungsnummer: **0 109 518**
**B1**

(12)

# EUROPÄISCHE PATENTSCHRIFT

(45) Veröffentlichungstag der Patentschrift:
**16.09.87**

(21) Anmeldenummer: **83109853.8**

(22) Anmeldetag: **03.10.83**

(51) Int. Cl.⁴: **A 01 D 41/12, A 01 F 12/46**

(54) Schneckenfördereinrichtung.

(30) Priorität: **19.11.82 DE 3242754**

(43) Veröffentlichungstag der Anmeldung:
**30.05.84 Patentblatt 84/22**

(45) Bekanntmachung des Hinweises auf die Patenterteilung:
**16.09.87 Patentblatt 87/38**

(84) Benannte Vertragsstaaten:
**BE DE FR GB IT**

(56) Entgegenhaltungen:
**DE - A - 1 407 742**
**DE - A - 2 643 653**
**DE - U - 7 214 374**
**GB - A - 766 297**
**GB - A - 951 921**
**GB - A - 982 852**

(73) Patentinhaber: **Klöckner-Humboldt-Deutz AG**
**Zweigniederlassung Fahr, D-7702 Gottmadingen (DE)**

(72) Erfinder: **Hönl, Josef, Paul-Böhm-Strasse 24,**
**D-8882 Lauingen (DE)**

ACTORUM AG

## Beschreibung

Die Erfindung betrifft eine Fördereinrichtung, insbesondere für die Entleerung eines Korntankes einer Erntemaschine nach dem Oberbegriff des Hauptanspruches.

In der Praxis sind mehrere derartige Fördereinrichtungen bekannt, wo das Problem auftritt, Fördergut von einer Querförderschnecke auf eine Steigförderschnecke zu übergeben. Diese Übergabestellen sind deshalb mit Problemen behaftet, weil der kontinuierliche Förderfluss unterbrochen wird und die Förderrichtung eine zweimalige Änderung erfährt.

Diese Anordnung der Entleerungsschnecken wird oft bei landwirtschaftlichen Erntemaschinen verwendet und zwar zur Entleerung eines Korntankes, wobei das geerntete Gut über eine Querförderschnecke und über ein etwa vertikal ausgerichtetes Schwenkrohr entladen wird.

So ist z. B. aus dem DE-U-7 214 374 eine Anordnung bekannt, bei welcher eine Querförderschnecke das Erntegut an eine Steigförderschnecke, welche in einem drehbar angeordneten Entladerohr gelagert ist, abgibt. Über das Entladerohr wird das Erntegut an einem externen Behälter abgegeben. Der Schneckengang der Querförderschnecke endet etwa auf der Höhe des Hüllkreises der Steigförderschnecke. Die Welle der Querförderschnecke ist in einer Abschlusswand gelagert. Fallen grössere Mengen von zu entladendem Erntegut an, so wird ein grosser Teil bis an die feststehende Abschlusswand und in den toten Winkel befördert, ohne vor der Steigförderschnecke erfasst zu werden.

Der Gutstrom wird an diesen Stellen abgebremst und setzt sich teilweise fest, ohne weiterbefördert zu werden. Als Folge davon sind Verstopfungen, Einengung des Entladequerschnittes und somit verminderte Entladeleistung.

Durch den hierbei relativ grossen Abstand zwischen den Wellen der Querförderschnecke und der Steigförderschnecke werden die genannten Folgeerscheinungen noch begünstigt. Wie aus der GB-A-951 921 zu ersehen ist, wurde versucht, dieses Problem durch Anbringen von auf die Schneckenwelle aufgesetzte Wurfplatten zu beseitigen. Auch hierbei ist der Abstand zwischen den Schneckenwellen relativ gross. Durch die Wurfplatten wird das Gut auf die andere Schnecke geschleudert. Bei noch etwas feuchtem Gut besteht die Gefahr, dass das Gut durch die Schleuderwirkung verfestigt wird und somit den Entladevorgang erschwert. Um Verklemmungen zwischen der Abschlusswand und den Wurfplatten zu vermeiden, müssen die Wurfplatten in entsprechendem Abstand zur Wand angebracht sein. Dabei entsteht jedoch wieder ein Totraum, in welchem sich Entladegut festsetzen kann.

Dadurch ist die Förderwirkung des Gegenförderers auf ein Minimum herabgesetzt, wodurch die Verstopfungsgefahr an dieser Stelle weiterhin besteht.

Die GB-A-982 852 zeigt eine Einrichtung, wobei die sich kreuzenden Schneckenwellen im Bereich der Übergabestelle in geringem Abstand zueinander angeordnet sind, wodurch eine kompakte Übergabestelle ohne grössere Freiräume, die nicht von einem Förderorgan erfasst werden, gebildet ist.

Nachteilig bei dieser Anordnung ist jedoch der bestehende Totraum im Bereich der Schlusswand des horizontalen Schneckenförderers.

Aus der DE-A-2 643 653 ist eine Einrichtung zu entnehmen, wobei an der Übergabestelle sich kreuzender Förderkanäle auf der einen Förderschneckenwelle ein weiterer Förderschneckenflügel mit entgegengesetztem Fördersinn angeordnet ist. Dieser Förderschneckenflügel ist von einer Abschlusswand bis etwa zur Mitte der Abgabeöffnung angeordnet, wo er mit dem ersten Förderschneckenflügel zusammentrifft. Dadurch soll das Austragen des Massengutes unterstützt werden.

Bei Verwendung eines derartigen gegenläufigen Förderschneckenflügels nach der DE-A-2 643 653 in der Ausführung der GB-A-982 852 kann der gegenläufige Schneckenabschnitt nicht bis zur Mitte der Abgabeöffnung geführt werden, vielmehr ist der Konstrukteur gezwungen, den gegenläufigen Abschnitt sehr kurz auszubilden.

Die Erfindung stellt sich somit die Aufgabe, eine kompakte und störungsfreie Übergabestelle einer derartigen Fördereinrichtung zu schaffen, wobei die sogenannten Toträume, die zum Festsetzen des Fördergutes führen können, weitgehendst zu vermeiden und ein kontinuierlicher und störungsfreier Entladefluss gewährleistet ist.

Diese Aufgabe wird dadurch gelöst, dass im Bereich der Abschlusswand koaxial zur Querförderschnecke ein mit der Querförderwelle drehfest verbundener Kegelstumpf angebracht ist, dessen grösste Grundfläche der Abschlusswand zugewandt ist.

Um die Abgabe an die Steigförderschnecke noch zu verbessern, ist es vorteilhaft, die Mantelfläche des Kegelstumpfes mit Aufsätzen bzw. mit Erhebungen zu versehen. Um die Wirkung des Gegenförderers besser beeinflussen zu können, wird vorgeschlagen, den Gegenförderer separat zu lagern und anzutreiben.

Um einen einfachen und kompakten Antrieb zu erhalten, wird vorgeschlagen, die Querförderschnecke und die Steigförderschnecke antriebsmässig miteinander zu verbinden.

Eine Ausführungsform der Erfindung wird anhand der nachfolgenden Zeichnungen näher beschrieben.

Es zeigen:

Fig. 1: Eine schematische Seitenansicht eines Mähdreschers nach der Erfindung.

Fig. 2: Einen vergrösserten Ausschnitt der Draufsicht nach Fig. 1 mit einer erfindungsgemäss ausgebildeten Übergabestelle.

Fig. 3: Eine Seitenansich nach Fig. 2.

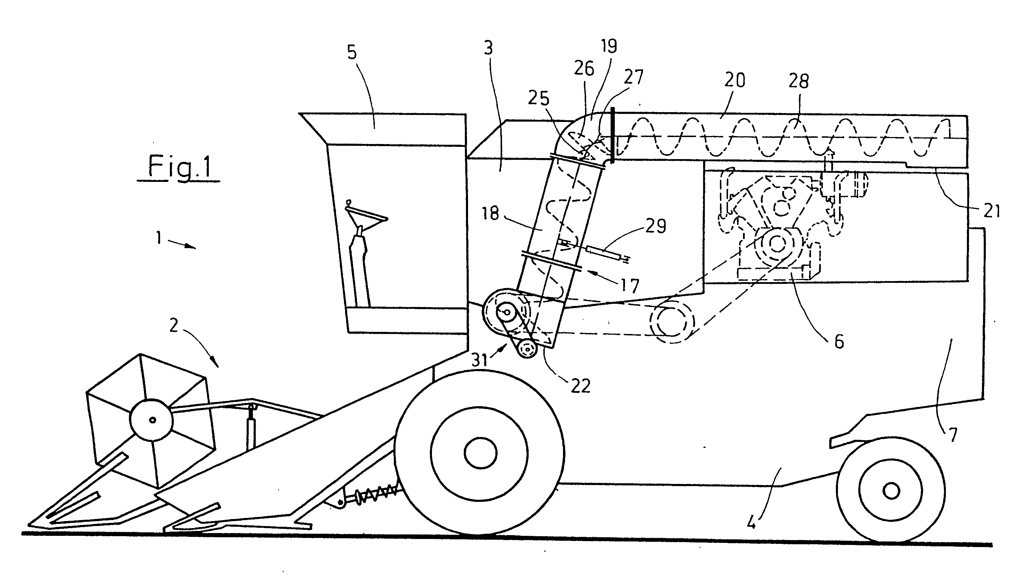

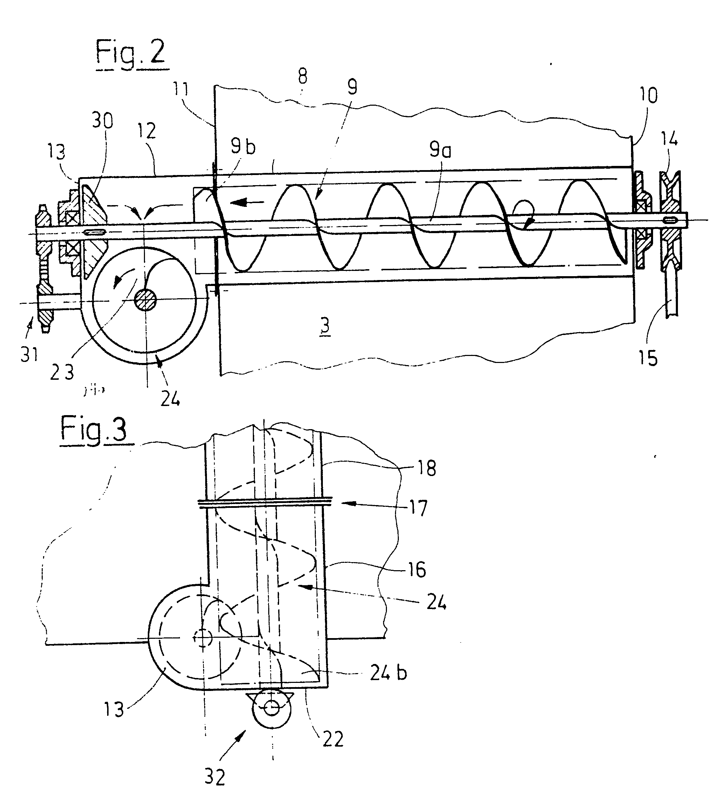

Fig. 1 zeigt einen Mähdrescher 1 mit einer Schneid- und Aufnahmevorrichtung 2, welche das Erntegut einer nicht näher gezeigten Dresch-, Trenn- und Reinigungseinrichtung zuführen. Das über die Reinigungseinrichtung bzw. Siebeinrichtung gewonnene Gut wird über einen hier nicht gezeigten Elevator in einen Korntank 3 befördert. Der Mähdrescher verfügt ausserdem über ein Fahrgestell 4, eine Fahrerkabine 5 und über einen schematisch angedeuteten Motor 6, der oberhalb einer Strohauswurfhaube 7 angeordnet ist. An seiner tiefsten Stelle ist der Korntank 3 mit einer halbkreisförmigen Mulde 8 (Fig. 2) versehen, in welcher sich eine Querförderschnecke 9 befindet. Die Mulde 8 erstreckt sich einenends bis zur Seitenwand 10 und andernends bis zur Seitenwand 11 des Korntankes. In Verlängerung mit der Mulde 8 ist an die Seitenwand 11 ein Rohrstück 12 angebracht, das mit einer Abschlusswand 13 versehen ist. Die Querförderschnecke 9 wird an der Seitenwand 10 und der Abschlusswand 13 gelagert. Der Antrieb der Querförderschnecke, welche nur angedeutet ist, erfolgt über eine mit der Querförderwelle 9a drehfest verbundene Riemenscheibe 14, die über einen Riemen 15 angetrieben wird. Das Rohrstück 12 weist ein etwa vertikal dazu angebrachtes Rohrstück 16 auf, wobei die Abschlusswand 13 tangential in den Mantel des Rohrstückes 16 übergeht. Koaxial über einen Drehkranz 17 ist das Rohrstück 16 mit einem Entladerohr 18 verbunden. Das Entladerohr 18 verläuft etwa bis auf Höhe der Oberkante des Korntankes 3 in vertikaler Richtung, wo ein gekrümmtes Rohrstück 19 anschliesst, an welchem ein etwa horizontal ausgerichtetes Rohrstück 20 befestigt ist.

An seinem äusseren Ende weist das Rohrstück 20 eine nach unten offene Abgabeöffnung 21 auf. Der Boden 22 des Rohrstückes 16 geht tangential in den Mantel des Rohrstückes 12 über. Der Mantel des Rohrstückes 12 ist im Bereich der Verbindung mit dem Rohrstück 16 unterbrochen, womit eine Übergabeöffnung 23 vorhanden ist.

In dem Rohrstück 16 und dem Entladerohr 18 ist eine Steigförderschnecke 24 drehbar gelagert. Über ein Gelenk 25 ist im gekrümmten Rohrabschnitt 19 ein Schneckenabschnitt 26 an die Steigförderschnecke 24 angeschlossen. Ein weiteres Gelenk 27 des Schneckenabschnittes 26 stellt die Verbindung zu einer nachfolgenden etwa horizontal ausgerichteten Entladeschnecke 28 her. Die Entladeschnecke 28 ist über der einfachhalber nicht gezeigten Lagerstellen im Rohrstück 20 gelagert.

Das Rohrstück 18 mit den nachfolgenden Rohrabschnitten 19 und 20 ist über den Drehkranz 17 gegenüber dem Rohrstück 16 verdrehbar. Die Drehbewegung erfolgt durch die Betätigung eines Hydraulikzylinders 29 der einerseits am Rohrstück 18 und andererseits an der Seitenwand 11 gelagert ist.

Wie in Fig. 2 zu erkennen, ist auf der Querförderwelle 9a im Bereich der Abschlusswand 13 ein Gegenförderer 30 in Form eines Kegelstumpfes angebracht.

Die Schneckenwendel 9b der Querförderschnecke 9 verlaufen etwa bis auf Höhe des Hüllkreises der Schneckenwendel 24b, wobei dieser sich bis annähernd zur Querförderwelle 9a erstreckt.

Der Antrieb der Steigförderschnecke erfolgt von der Querförderwelle 9a aus über einen Kettentrieb 31 und einen Winkeltrieb 32.

Beim Entladevorgang wird das sich im Korntank 3 befindliche Erntegut durch die sich in Drehbewegung versetzte Querförderschnecke 9 der Steigförderschnecke 24 zugeführt. Ein Teil des Erntegutes wird direkt von der ebenfalls in Antriebsverbindung befindlichen Steigförderschnecke erfasst und nach oben transportiert. Der noch nicht erfasste Teil wird in Richtung auf die Abschlusswand 13 gedrückt. Der hier befindliche Gegenförderer wirkt nun derart auf das ankommende Gut, so dass eine mit Pfeil gekennzeichnete Gegenströmung entsteht, die der Förderrichtung der Querförderwelle entgegenwirkt. Dort, wo die Gegenströmungen zusammentreffen, besteht für das Gut nur die Möglichkeit, in Richtung auf die Übergabeöffnung 23 auszuweichen, womit es von der Steigförderschnecke 24 ebenfalls erfasst und nach oben abgeführt wird. Das von der Steigförderschnecke 24 nach oben beförderte Gut wird über den Schneckenabschnitt 26 und über die Entladeschnecke 28 weiterbefördert und über die Abgabeöffnung an einen Behälter oder ein Ladefahrzeug abgegeben. Zum Entladen wird das Entladerohr 18 bzw. das Rohrstück 19 und 20 über den Drehkranz 17 nach aussen verschwenkt. Durch die Anbringung des Gegenförderers 30, welcher auch andersförmig ausgebildet sein kann, wird ein kontinuierlicher Entladevorgang gewährleistet sowie bisher vorhandene Toträume vermieden.

**Patentansprüche**

1. Fördereinrichtung, insbesondere für eine Erntemaschine (1), mit einer jeweils zumindest teilweise mit einem Rohr ummantelten Querförder- und Steigförderschnecke (9, 24), die sich an ihren Übergabeenden im Abstand kreuzen, wobei der axiale Abstand der Schneckenwellen kleiner ist als die Summe der Hüllkreisradien der Schneckengänge (9b, 24b) und grösser als die Summe des Hüllkreisradius der Steigförderschnecke (24) und des halben Durchmessers der Schneckenwelle (9a) der Querförderschnecke (9) und der Schneckengang (9b) der Querförderschnecke bis etwa auf Höhe des Hüllkreises der Steigförderschnecke (24) geführt ist, wobei das Rohr (8) der Querförderschnecke (9) mit einer Abschlusswand (13) versehen ist, die etwa mit dem Rohr (16) der Steigförderschnecke (24) tangiert und in deren Bereich eine Lagerung der Querförderschnecke (9) angebracht ist, dadurch gekennzeichnet, dass im Bereich der Abschlusswand (13) koaxial zur Querförderschnecke (9) ein mit der Querförderwelle (9a) drehfest verbundener Kegelstumpf (30) angebracht ist, dessen grösste Grundfläche der Abschlusswand zugewandt ist.

2. Fördereinrichtung nach Anspruch 1, dadurch gekennzeichnet, dass die Mantelfläche des Kegelstumpfes mit Aufsätzen bzw. mit Erhebungen versehen ist.

3. Fördereinrichtung nach Anspruch 1, dadurch gekennzeichnet, dass der Kegelstumpf (30) koaxial zur Querförderwelle (9a) gelagert ist und separat antriebbar ist.

4. Fördereinrichtung nach einem der Ansprüche 1 bis 3, dadurch gekennzeichnet, dass die Querförderschnecke (9) und die Steigförderschnecke (24) über einen Ketten- oder Keilriementrieb und ein Winkelgetriebe miteinander in Antriebsverbindung stehen.

## Claims

1. Conveyor means, more especially for a harvester (1), having a transverse screw conveyor (9) and an ascending screw conveyor (24) which are each at least partially encased in a tube and intersect with each other at their delivery ends with a spacing therebetween, wherein the axial spacing between the screw shafts is smaller than the sum of the radii of the encasing circles of the screw threads (9b, 24b) and greater than the sum of the radius of the encasing circle of the ascending screw conveyor (24) and half the diameter of the screw shaft (9a) of the transverse screw conveyor (9), and the screw thread (9b) of the transverse screw conveyor extends to approximately the height of the encasing circle of the ascending screw conveyor (24), wherein the tube (8) of the transverse screw conveyor (9) is provided with an end wall (13) which is substantially tangential to the tube (16) of the ascending screw conveyor (24), and a mounting for the transverse screw conveyor (9) is provided in the region of the end wall, characterised in that a truncated cone (30), which is non-rotatably connected to the transverse conveyor shaft (9a), is provided in the region of the end wall (13) coaxially with the transverse screw conveyor (9), and the largest surface of the truncated cone faces the end wall.

2. Conveyor means according to claim 1, characterised in that the surface of the truncated cone is provided with attachments or with raised portions.

3. Conveyor means according to claim 1, characterised in that the truncated cone (30) is mounted coaxially with the transverse conveyor shaft (9a) and is separately drivable.

4. Conveyor means according to one of claims 1 to 3, characterised in that the transverse screw conveyor (9) and the ascending screw conveyor (14) are in driving engagement with each other through the intermediary of a chain drive or V-belt drive and a mitre gear.

## Revendications

1. Dispositif transporteur en particulier pour une machine de récolte (1), avec une vis transporteuse sans fin transversale et une vis transporteuse sans fin ascendante (9, 24) enveloppées chacune au moins partiellement par un tube, qui se croisent avec un certain écartement à leurs extrémités de délivrance, la distance axiale des arbres de vis sans fin étant plus petite que la somme des rayons de cercle enveloppant des filets de vis sans fin (9b, 24b) et plus grand que la somme du rayon de cercle enveloppant de la vis transporteuse sans fin élévatrice (24) et du demi-diamètre de l'arbre de vis sans fin (9a) de la vis transporteuse sans fin transversale (9) et le filetage de vis sans fin (9b) de la vis transporteuse sans fin transversale s'étendant sensiblement jusqu'au niveau du cercle enveloppant de la vis transporteuse sans fin ascendante (24), le tube (8) de la vis transporteuse sans fin transversale (9) étant pourvu d'une paroi de fermeture (13) qui est sensiblement tangente au tube (16) de la vis transporteuse sans fin ascendante (24) et au voisinage de laquelle est fixé un palier-support de la vis transporteuse sans fin transversale (9), caractérisé en ce qu'au voisinage de la paroi de fermeture (13), coaxialement à la vis transporteuse sans fin transversale (9) est fixé un cône tronqué (30) relié solidairement en rotation à l'arbre de transporteur transversal (9a), dont la grande surface de base est tournée vers la paroi de fermeture.

2. Dispositif transporteur selon la revendication 1, caractérisé en ce que la surface de paroi latérale du cône tronqué est pourvue de chapeaux ou d'éminences.

3. Dispositif transporteur selon la revendication 1, caractérisé en ce que le cône tronqué (30) est monté coaxialement à l'arbre de transporteur transversal (9a) et est entraîné séparément.

4. Dispositif transporteur selon l'une des revendications 1 à 3, caractérisé en ce que la vis transporteuse sans fin transversale (9) et la vis transporteuse sans fin ascendante (24) sont en liaison d'entraînement l'une avec l'autre par l'intermédiaire d'une transmission à chaîne ou à courroie trapézoïdale et d'une commande à engrenage de renvoi d'angle.

Fig.1

## Fig.2

## Fig.3